# EUROPEAN PATENT APPLICATION

(11) **EP 4 672 454 A1**
(43) Date of publication of application: **31.12.2025**
(21) Application number: 25184353.8
(22) Date of filing: 23.06.2025
(51) Int. Cl.: H01M 50/204, H01M 50/276, H01M 50/342, H01M 50/367, H01M 50/383, H01M 50/30, H01M 50/213, H01M 50/264, H01M 50/291, H01M 50/293, H01M 50/325

(54) **BATTERY MODULE AND BATTERY BOX THEREOF**

(30) Priority: 26.06.2024 TW 113123893
(71) Applicant: Liwatt X Inc., Taoyuan City 330063 (TW)
(72) Inventor: Chang, I-Ling, 330063 Taoyuan City (TW); Lin, Meng-Hsi, 330063 Taoyuan City (TW)
(74) Representative: Schwarz & Partner Patentanwälte GmbH

(57) **Abstract**

A battery module includes a battery box (H), a plurality of cells (B), and a firefighting material (E). The battery box (H) includes a box body (10), a cover (20), and a pressure relief valve (30). The cover (20) is arranged on an opening (12) of the box body (10). The cover (20) includes a flow channel (P) and a first surface (211) and a second surface (221) opposite to each other. The flow channel (P) is provided between the first surface (211) and the second surface (221). Two ends of the flow channel (P) are respectively in communication with a first pressure relief hole (2111) of the first surface (211) and the second pressure relief hole (2211) of the second surface (221). The pressure relief valve (30) is arranged in the first pressure relief hole (2111). The cells (B) are accommodated in the accommodating space (11) of the box body (10). The firefighting material (E) is accommodated in the accommodating space (11) and distributed around the cells (B). The disclosure further provides a battery box (H) of a battery module.

## Description

### BACKGROUND

### Technical Field

The disclosure relates to an energy storage structure, and in particular, to a secondary battery and a box structure for accommodating a secondary battery.

### Related Art

With the successive emergence of air pollution and increasingly shortage of petroleum reserves, the use of fuel energy has been gradually restricted. For the transportation industry with a large proportion of fuel energy consumption, fuel energy was used as a main power source in the past. With the rise of environmental awareness, the trend of using electricity as a power source has taken shape.

In battery types of electricity storage devices, since a lithium battery has advantages such as a light weight, high endurance, a high working voltage, a high energy density, a long lifespan, and environmental friendliness, if the lithium battery is used as an energy storage medium for transportation to provide electric power as energy, vehicles during driving not only do not cause air pollution, but also can reduce fuel usage, thereby achieving the goal of energy conservation and carbon reduction. Therefore, in the transportation industry, increasingly more major automobile manufacturers have been continuously developing vehicles with lithium batteries as the main energy storage medium. Based on the foregoing various advantages of the lithium batteries, the lithium batteries not only can be applied to the transportation industry, but also can be widely applied to various electronic products, power vehicles, and various energy storage systems.

However, since an interior of a lithium battery is mainly composed of a positive electrode, an electrolyte, a negative electrode, and a separator film isolated between the positive electrode and the negative electrode, an internal structure of lithium batteries contains flammable materials, which results in a very narrow safe operating temperature range for the lithium battery. When the operating temperature of the lithium battery exceeds a critical level, a thermal runaway occurs.

The thermal runaway is a phenomenon that an exothermic reaction inside the lithium battery causes a temperature to rise rapidly out of control. Possible causes of thermal runaway include dendrites generated at the anode of the lithium battery after repeated charging and discharging penetrating the separator film and causing a short circuit between the cathode and the anode, improper design of the lithium battery, poor quality of the separator film of the lithium battery, or improper use of the lithium battery (such as overcharging, over-discharging, dropping, or external impact). In an initial stage of thermal runaway of the lithium battery, the separator film isolated between the positive electrode and the negative electrode starts to melt and form an opening, which may aggravate the internal short circuit of the lithium battery. Meanwhile, more heat is generated inside the lithium battery, which accelerates the melting of the separator film, making the internal short circuit of the lithium battery worse and triggering a more violent chemical reaction to produce a large amount of gas. When an outer package of the lithium battery cannot withstand the pressure, it may rupture and even catch fire or explode.

In practical application, in a lithium battery pack composed of a plurality of lithium batteries, often only a single lithium battery has a problem at the same time. However, in pursuit of a higher energy density, the lithium batteries in a lithium battery pack are arranged very compactly with each other. Therefore, when a thermal runaway occurs in a single lithium battery, the high temperature generated by the lithium battery is conducted to the surrounding lithium batteries, causing the separator film of the surrounding lithium batteries to fail and thermal runaway, and further causing the entire lithium battery pack to burn out.

Currently, a lithium battery pack composed of a plurality of lithium batteries has been equipped with a battery management system (BMS) to monitor a voltage of each lithium battery, to prevent abnormal conditions such as over-discharging, over-charging, or overheating of the battery. Furthermore, in the mechanical structure design of a single lithium battery, such as a cylindrical lithium battery, a prismatic lithium battery, or a pouch lithium battery, a shell thereof has an explosion-proof design. In other words, the shell can be destroyed when the internal pressure reaches a predetermined value, releasing the pressure inside the lithium battery, thereby preventing explosion of the lithium battery.

However, although the explosion problem of the single lithium battery is resolved, the chemical reaction of the lithium battery with thermal runaway still continues, and the generated high temperature is also rapidly conducted to an adjacent lithium battery, causing the adjacent lithium battery to fail. Since the lithium battery pack is sealed in a box body, a more serious explosion may be caused when a large amount of gas generated by thermal runaway of the plurality of lithium batteries has no way to vent. Furthermore, to ensure personal safety, various different types of batteries also have safety requirements as long as a possibility of combustion or explosion exists.

### SUMMARY

The disclosure provides a battery box, including a box body, a cover, and a pressure relief valve. The box body includes an accommodating space and an opening. The cover is arranged on the opening. The cover includes a flow channel and a first surface and a second surface opposite to each other. The flow channel is provided between the first surface and the second surface. The first surface has a first pressure relief hole. The second surface has a second pressure relief hole. Two ends of the flow channel are respectively in communication with the first pressure relief hole and the second pressure relief hole. The pressure relief valve is arranged in the first pressure relief hole.

The disclosure further provides a battery module, including the foregoing battery box, a plurality of cells, and a firefighting material. The cells are accommodated in the accommodating space of the box body. The firefighting material is accommodated in the accommodating space and distributed around the cells.

Therefore, when cells explode due to thermal runaway, the firefighting materials distributed around the cells can immediately absorb the electrolyte, block the cells from constantly undergoing the electrochemical reaction, shorten a duration of the electrochemical reaction, and reduce the harm caused by the electrochemical reaction to the surroundings. Furthermore, the gas generated when the cells explode is to flow through the flow channel and be depressurized before being discharged from the pressure relief valve, to prevent the pressure relief valve from being damaged or failing due to excessive pressure, thereby shortening the burning time after the battery module burns, striving for disaster relief time, and avoiding expansion of the damage caused.

In some embodiments, an area of the foregoing first pressure relief hole is greater than an area of the second pressure relief hole.

In some embodiments, a plurality of second pressure relief holes are provided, and a sum of areas of the second pressure relief holes is 90% to 100% of the area of the first pressure relief hole.

In some embodiments, the foregoing first surface extends along a first direction and a second direction perpendicular to the first direction, the flow channel includes a plurality of communication sections that are in communication with each other, a portion of the foregoing communication sections extends along the first direction, and a portion of the foregoing communication sections extends along the second direction.

In some embodiments, the foregoing cover further includes a partition wall. In a third direction perpendicular to the first direction and the second direction, one end of the partition wall is partially connected to the second surface, and an other end of the partition wall extends to the first surface.

In some embodiments, the foregoing partition wall includes a plurality of baffle surfaces, and each of the baffle surfaces is a planar structure.

In some embodiments, the foregoing cover is made of a fireproof material.

In some embodiments, the foregoing fireproof material is metal, fireproof gypsum, or a fireproof fiber material.

In some embodiments, the foregoing fireproof fiber material is made of a carbon fiber material, a glass fiber material, a stone fiber material, or calcium silicate fiber.

In some embodiments, the foregoing firefighting material is a dry powder fire extinguishing agent such as sodium bicarbonate, sodium chloride, or potassium chloride.

In some embodiments, the battery module further includes a filter arranged on the pressure relief valve.

### BRIEF DESCRIPTION OF THE DRAWINGS

FIG. 1 is a schematic diagram of a three-dimensional appearance of an embodiment of a battery module of the disclosure.
FIG. 2 is a schematic exploded view of a three-dimensional structure of an embodiment of a battery module of the disclosure.
FIG. 3 is a schematic diagram of an embodiment of a cover of a battery module according to the disclosure.
FIG. 4 is a schematic plan view of an embodiment of a cover of a battery module of the disclosure.
FIG. 5 is a schematic three-dimensional cross-sectional view of a local structure of a battery module of the disclosure.
FIG. 6 is a partial structural plan view of FIG. 5.
FIG. 7 is a first flow channel pressure simulation diagram of a cover of a battery module according to the disclosure.
FIG. 8 is a second flow channel pressure simulation diagram of a cover of a battery module according to the disclosure.
FIG. 9 is a schematic plan view of another embodiment of a cover of a battery module of the disclosure.
FIG. 10 is a schematic exploded view of a three-dimensional structure of yet another embodiment of a battery module of the disclosure.
FIG. 11 is a partial schematic diagram of a cover of yet another embodiment of a battery module of the disclosure.

### DETAILED DESCRIPTION

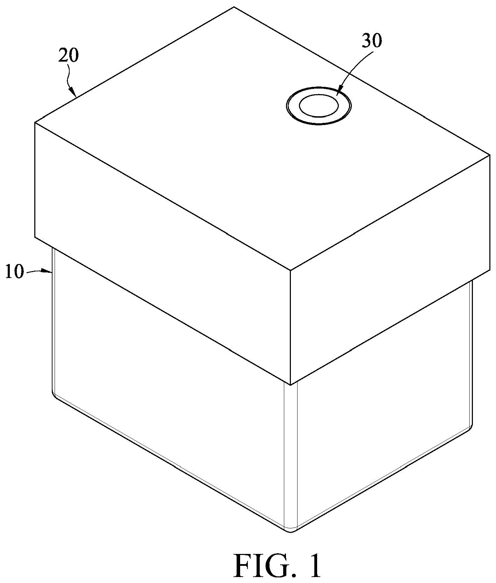

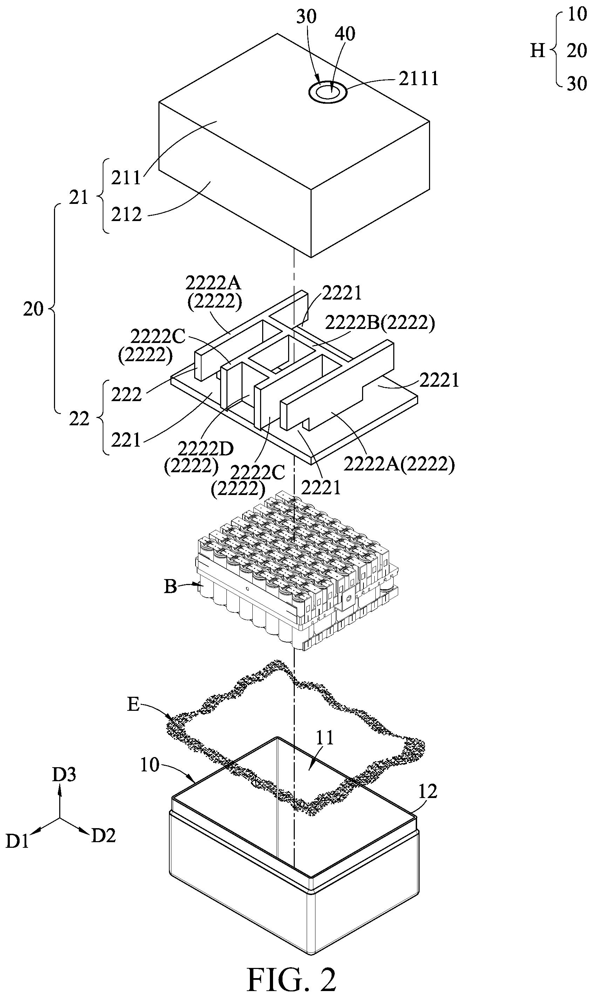

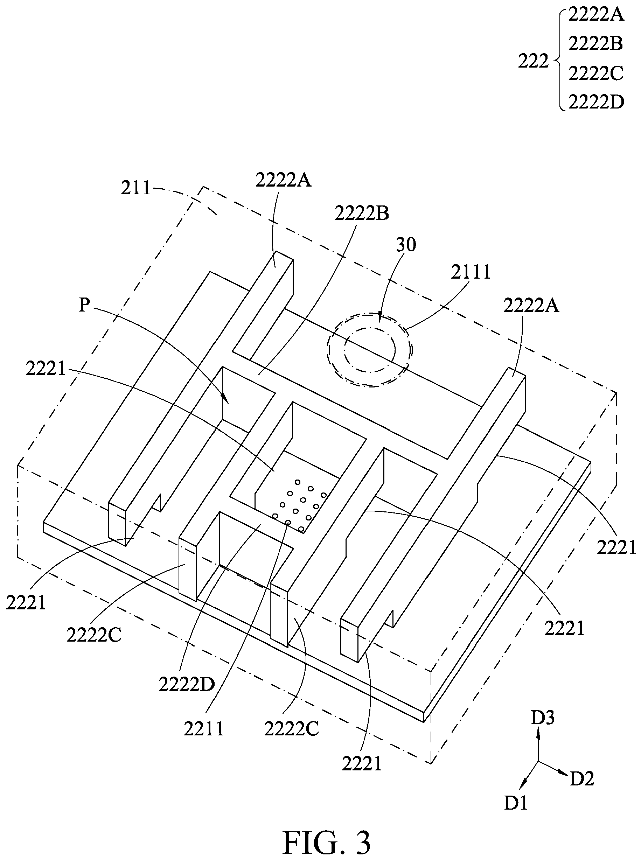

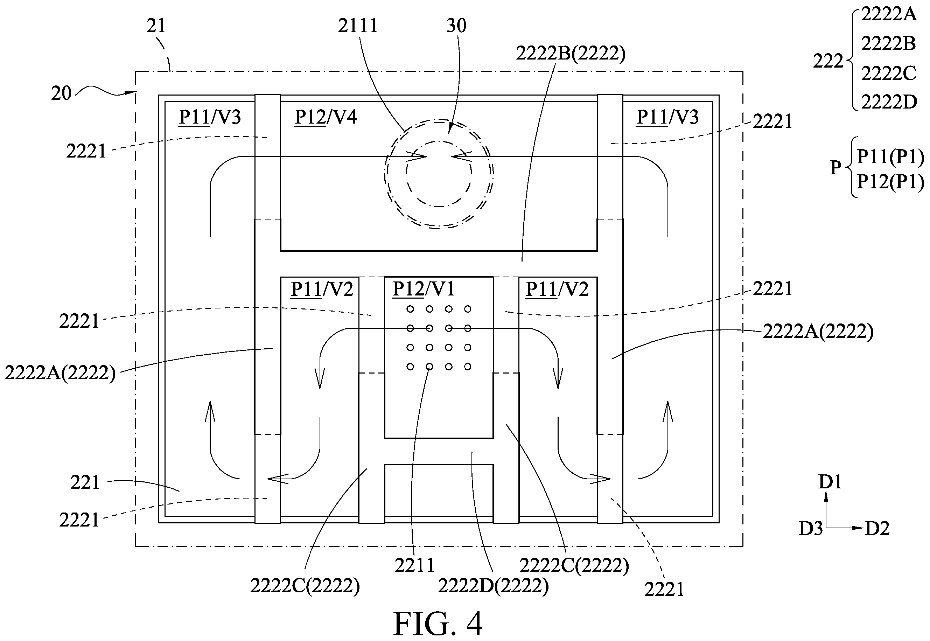

Refer to FIG. 1 to FIG. 4. FIG. 1 is a schematic diagram of a three-dimensional appearance of an embodiment of a battery module of the disclosure. FIG. 2 is a schematic exploded view of a three-dimensional structure of an embodiment of a battery module of the disclosure. FIG. 3 is a schematic diagram of an embodiment of a cover of a battery module according to the disclosure. FIG. 4 is a schematic plan view of an embodiment of a cover of a battery module of the disclosure. The disclosure provides a battery module and a battery box thereof. The battery module includes a battery box H, cells B, and a firefighting material E. The cells B and the firefighting material E are accommodated in an accommodating space 11 of the battery box H. A cover 20 of the battery box H is provided with a pressure relief valve 30 and internally designed with a flow channel P bringing the accommodating space 11 into communication with the outside. When the cells B explode, the gas generated by the explosion is guided through the design of the flow channel P to be discharged to the outside along the flow channel P. The pressure of the gas continuously decreases when flowing through the flow channel P, thereby preventing the pressure relief valve 30 from being directly destroyed and failing due to excessive pressure.

Referring to FIG. 1 to FIG. 4, the battery box H includes a box body 10, the cover 20, and the pressure relief valve 30. The box body 10 includes the accommodating space 11 and an opening 12. The cover 20 is arranged on the opening 12. The cover 20 includes a flow channel P and a first surface 211 and a second surface 221 opposite to each other. The flow channel P is provided between the first surface 211 and the second surface 221. The first surface 211 has a first pressure relief hole 2111. The second surface 221 has a second pressure relief hole 2211. Two ends of the flow channel P are respectively in communication with the first pressure relief hole 2111 and the second pressure relief hole 2211. The pressure relief valve 30 is arranged in the first pressure relief hole 2111.

Therefore, when the cells B explode due to thermal runaway, the firefighting materials E distributed around the cells B can immediately absorb the electrolyte, block the cells B from constantly undergoing the electrochemical reaction, shorten a duration of the electrochemical reaction, and reduce the harm caused by the electrochemical reaction to the surroundings. Furthermore, the gas generated when the cells B explode is to flow through the flow channel P and be depressurized before being discharged from the pressure relief valve 30, to prevent the pressure relief valve 30 from being damaged or failing due to excessive pressure, thereby shortening the burning time after the battery module burns, striving for disaster relief time, and avoiding expansion of the damage caused.

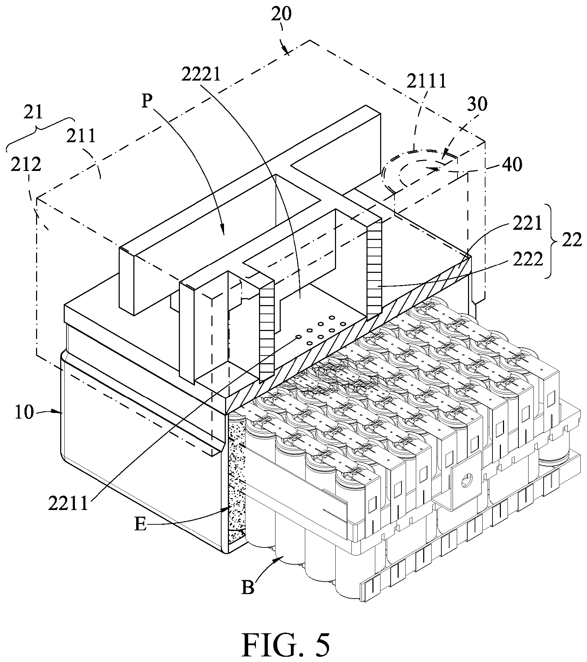

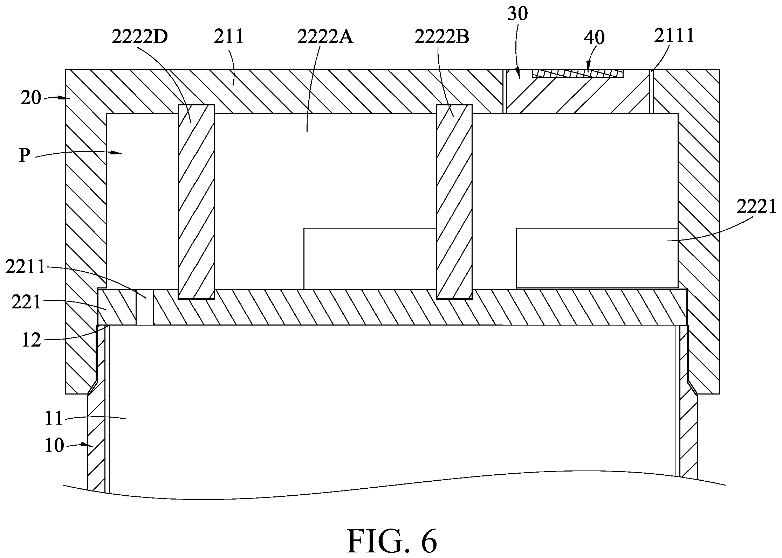

Referring to FIG. 2 in conjunction with FIG. 5 and FIG. 6, FIG. 5 is a schematic three-dimensional cross-sectional view of a local structure of a battery module of the disclosure. FIG. 6 is a partial structural plan view of FIG. 5. The accommodating space 11 of the box body 10 is configured to accommodate the cells B. In some embodiments, the box body 10 is a hollow rectangular body with one side open, but the disclosure is not limited thereto. In another embodiment, a form of the box body 10 may be determined based on a quantity of the cells B to be accommodated or a shape of an applicable environment.

Referring to FIG. 2 and FIG. 5, each of the cells B is a cylindrical battery can structure, including but not limited to an 18650 lithium battery (a cylindrical battery with a diameter of 18 mm and a length of 65 mm). In some embodiments, the plurality of cells B are connected in parallel or in series and arranged as a battery module in a matrix form. In some embodiments, the cells B are not limited to lithium cells B. In another embodiment, the battery box H of the disclosure is also applicable to various cells B that may explode or burn.

Referring to FIG. 2 to FIG. 6, the cover 20 is configured to be arranged on the opening 12 of the box body 10. In some embodiments, the cover 20 includes a first component 21 and a second component 22. The first component 21 and the second component 22 jointly form the flow channel P. In these embodiments, the first component 21 includes a first surface 211 and a circumferential surface 212. One end of the circumferential surface 212 is connected to a periphery of the first surface 211 and is not coplanar with the first surface 211. In some embodiments where the box body 10 is a hollow rectangular body, the first surface 211 is a rectangle extending along a first direction D1 and a second direction D2 that are perpendicular to each other, and the circumferential surface 212 extends along a third direction D3 perpendicular to the first direction D1 and the second direction D2. In these embodiments, the first pressure relief hole 2111 is provided to extend through the first surface 211.

Referring to FIG. 2 to FIG. 6, in some embodiments, the second component 22 includes the second surface 221 and a partition wall 222. The second surface 221 is a plane, and one end of the partition wall 222 is partially connected to the second surface 221 and extends along the third direction D3. In these embodiments, one end of the partition wall 222 is arranged to extend through a plurality of openings 2221 to be partially separated from the second surface 221. The second component 22 is connected to the circumferential surface 212 of the first component 21 through the second surface 221. When the second component 22 is connected to the first component 21, the other end of the partition wall 222 of the second component 22 is connected to the first surface 211. In this way, the first surface 211 of the first component 21 and the second surface 221 of the second component 22 are spaced apart from each other, and the first surface 211, the second surface 221, the partition wall 222, and the openings 2221 can jointly form the flow channel P. In these embodiments, the second pressure relief hole 2211 is provided to extend through the second surface 221 of the second component 22.

Referring to FIG. 2 to FIG. 6, in some embodiments, the area of the first pressure relief hole 2111 is greater than the area of each second pressure relief hole 2211. Accordingly, when a high-pressure gas is generated by explosion of the cells B inside the box body 10, the high-pressure gas enters the flow channel P through the second pressure relief hole 2211. Since a fluid resistance at the first pressure relief hole 2111 is less than a fluid resistance at the second pressure relief hole 2211. A fluid entering the flow channel P through the second pressure relief hole 2211 can naturally flow toward the first pressure relief hole 2111, causing the fluid to naturally flow through the entire flow channel P. The process of the fluid flowing through the flow channel P reduces the fluid pressure, causing the pressure of the fluid flowing to the first pressure relief hole 2111 to be less than the pressure of the fluid when entering the flow channel P through the second pressure relief hole 2211. This prevents excessive pressure from damaging the pressure relief valve 30 arranged on the first pressure relief hole 2111, to ensure that the pressure relief valve 30 can indeed provide a pressure relief effect and reduce the possibility of explosion of the box body 10.

Referring to FIG. 2 to FIG. 6, in some embodiments where the area of the first pressure relief hole 2111 is greater than the area of each second pressure relief hole 2211, a plurality of second pressure relief holes 2211 are provided, and a sum of areas of the second pressure relief holes 2211 is 90% to 100% of the area of the first pressure relief hole 2111. Therefore, a chance of the fluid entering the flow channel P can be increased on the basis that the pressure at an inlet of the flow channel P (at the second pressure relief hole 2211) is greater than the pressure at an outlet of the flow channel P (at the first pressure relief hole 2111), thereby improving tolerance of the box body 10.

Referring to FIG. 2 to FIG. 6, in some embodiments, the flow channel P in the cover 20 includes a plurality of communication sections P1 that are in communication with each other. A portion of the plurality of communication sections P1 extends along the first direction D1, and a portion of the plurality of communication sections P1 extends along the second direction D2. The communication sections P1 extending along different directions are in communication with each other and connected at the openings 2221. In this way, the flow channel P extends in a winding manner in the cover 20, so as to guide the fluid to flow in a winding manner in the cover 20 to achieve a pressure reduction effect. It should be noted that each communication section P1 refers to a section of the flow channel P that includes two openings 2221 for the fluid to enter and output, and a connecting direction of the two openings 2221 of each communication section P1 is an extending direction of the communication section P1.

Referring to FIG. 2 to FIG. 6, in some embodiments, the communication sections P1 include a plurality of first communication sections P11 and a plurality of second communication sections P12. The first communication sections P11 extend along the first direction D1, and the second communication sections P12 extend along the second direction D2. In these embodiments, a quantity of first communication sections P11 is four, and a quantity of second communication sections P12 is two. Two ends of each second communication section P12 are respectively in communication with each of the first communication sections P11, and the first communication sections P11 that are brought into communication by each second communication section P12 are parallel to each other.

Referring to FIG. 2 to FIG. 6, in some embodiments, the first pressure relief hole 2111 and the second pressure relief hole 2211 are respectively located in a position of each second communication section P12. In this way, the high-pressure gas entering the flow channel P through the second pressure relief hole 2211 has to pass through the winding flow channel P and then is discharged through the first pressure relief hole 2111. The high-pressure gas can be indeed depressurized, and the pressure of the fluid discharged through the first pressure relief hole 2111 can be indeed lower than the pressure of the fluid entering the flow channel P through the second pressure relief hole 2211, thereby ensuring that the pressure relief valve 30 can effectively relieve pressure without being damaged.

Referring to FIG. 2 to FIG. 6, in some embodiments, the partition wall 222 of the cover 20 includes a plurality of baffle surfaces 2222, and each of the baffle surfaces 2222 is a planar structure. In these embodiments, the baffle surface 2222 includes two first baffle surfaces 2222A, one second baffle surface 2222B, and two third baffle surfaces 2222C. Each of the first baffle surfaces 2222A extends along the first direction D1 between two opposite sides of the second surface 221. The two first baffle surfaces 2222A are parallel to and spaced apart from each other. The second baffle surface 2222B extends along the second direction D2 between the two first baffle surfaces 2222A. Each of the third baffle surfaces 2222C extends along the first direction D1 between one side of the second baffle surface 2222B and one side of the second surface 221. In these embodiments, a length of the third baffle surface 2222C in the first direction D1 is less than a length of each first baffle surface 2222A in the first direction D1.

Referring to FIG. 2 to FIG. 6, in these embodiments, two ends of each first baffle surface 2222A in the first direction D1 are each provided with an opening 2221, and one end of each third baffle surface 2222C connected to the second baffle surface 2222B is provided with the opening 2221. In this way, the openings 2221 on two ends of each first baffle surface 2222A and the first component 21 form two first communication sections P11 extending along the first direction D1. A side of the second baffle surface 2222B different from the third baffle surface 2222C, the two first baffle surfaces 2222A, and the first component 21 form one of the second communication sections P12 extending along the second direction D2. Each first baffle surface 2222A, each third baffle surface 2222C, and the first component 21 form other two first communication sections P11 extending along the first direction D1. The two third baffle surfaces 2222C and the first component 21 form another second communication section P12 extending along the second direction D2.

Referring to FIG. 2 to FIG. 6, in some embodiments, the baffle surface 2222 further includes a fourth baffle surface 2222D. The fourth baffle surface 2222D extends between the two third baffle surfaces 2222C along the second direction D2, thereby limiting a volume of the second communication section P12 formed by the second baffle surface 2222B, the third baffle surface 2222C, the fourth baffle surface 2222D, and the first component 21.

Referring to FIG. 2 to FIG. 6, in some embodiments, the first pressure relief hole 2111 is provided in the second communication section P12 formed by the two first baffle surfaces 2222A, the second baffle surface 2222B, and the first component 21. The second pressure relief hole 2211 is provided in the second communication section P12 formed by the second baffle surface 2222B, the third baffle surface 2222C, the fourth baffle surface 2222D, and the first component 21. In these embodiments, when a high-pressure gas is generated in the accommodating space 11 of the box body 10, the high-pressure gas enters the flow channel P of the cover 20 through the second pressure relief hole 2211, then flows through the first communication section P11 formed by the first baffle surface 2222A, the second baffle surface 2222B, the third baffle surface 2222C, and the first component 21 and the first communication section P11 formed by the first baffle surface 2222A and the first component 21 in sequence, and finally enters the second communication section P12 formed by the two first baffle surfaces 2222A, the second baffle surface 2222B, and the first component 21 and is discharged through the first pressure relief hole 2111.

Referring to FIG. 2 to FIG. 6, in some embodiments, the second communication section P12 formed by the second baffle surface 2222B, the third baffle surface 2222C, the fourth baffle surface 2222D, and the first component 21 has a first volume V1. The first communication section P11 formed by the first baffle surface 2222A, the second baffle surface 2222B, the third baffle surface 2222C, and the first component 21 has a second volume V2. The first communication section P11 formed by the first baffle surface 2222A and the first component 21 has a third volume V3. The second communication section P12 formed by the two first baffle surfaces 2222A, the second baffle surface 2222B, and the first component 21 has a fourth volume V4. The fourth volume V4 is greater than the third volume V3. The third volume V3 is greater than the second volume V2. The second volume V2 is greater than the first volume V1. In other words, after the fluid enters the flow channel P through the second pressure relief hole 2211, the volume of each communication section P1 through which the fluid flows gradually increases. In this way, a flow velocity of the fluid is gradually reduced when the fluid enters the communication section P1 with a gradually larger volume, thereby achieving the pressure reduction effect indeed.

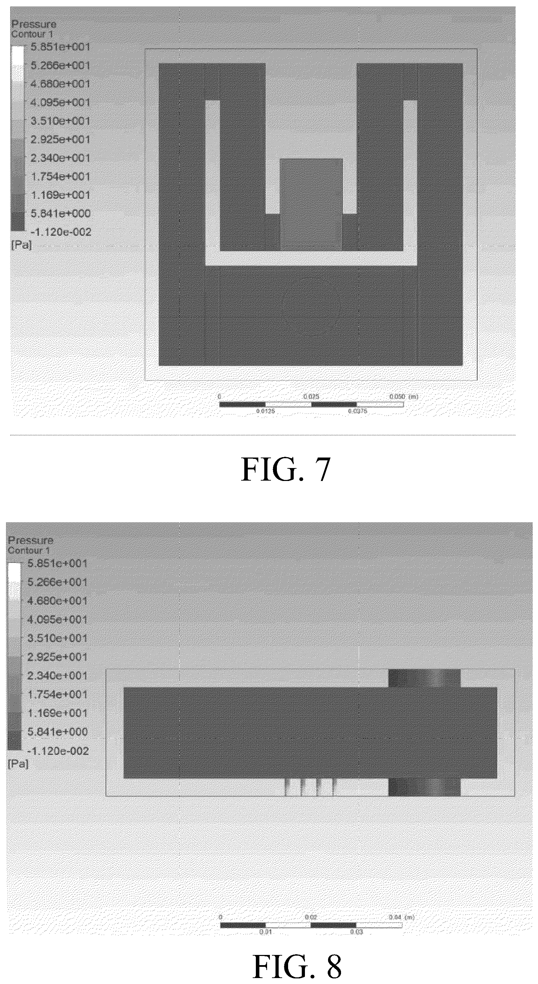

Referring to FIG. 4 to FIG. 6 in conjunction with FIG. 7 and FIG. 8, FIG. 7 is a first flow channel pressure simulation diagram of a cover of a battery module according to the disclosure. FIG. 8 is a second flow channel pressure simulation diagram of a cover of a battery module according to the disclosure. It should be noted that FIG. 7 and FIG. 8 are analyzed through finite element analysis software (Ansys Mechanical) applicable to structural engineering. FIG. 7 is a flow channel pressure distribution diagram of the cover 20 from the corresponding perspective of FIG. 4. FIG. 8 is a flow channel pressure distribution diagram of the cover 20 from the corresponding perspective of FIG. 6. FIG. 7 and FIG. 8 may show that the pressure at the second pressure relief hole 2211 of the cover 20 is obviously greater than the pressure at the first pressure relief hole 2111, which can indicate that the cover 20 of the battery box H of the disclosure can indeed achieve the pressure reduction effect due to provision of the flow channel P.

In some embodiments, a total length of the flow channel P may be determined based on the pressure that the pressure relief valve 30 can withstand. When the pressure relief valve 30 can withstand a smaller pressure, the flow channel P has a higher requirement for pressure reduction, and the length of the flow channel P is larger. Conversely, when the pressure relief valve 30 can withstand a larger pressure, the flow channel P has a lower requirement for pressure reduction, and the length of the flow channel P may be reduced.

To extend the length of the flow channel P in a limited space of the cover 20, in some embodiments, the total length of the flow channel P may be extended through configuration of the communication sections P1 with turns. In some embodiments of FIG. 2 to FIG. 4, the communication sections P1 are described by using four first communication sections P11 and two second communication sections P12 that are connected by turns as an example. However, the disclosure is not limited thereto.

In some embodiments, the flow channel P is not limited to being formed by the communication sections P1 vertically connected to each other. In another embodiment, the length of the flow channel P may also be increased by changing the shape of the flow channel P. In some embodiments, the flow channel P as a whole may be configured into a continuous spiral shape, thereby extending the length of the flow channel P in the limited space similarly.

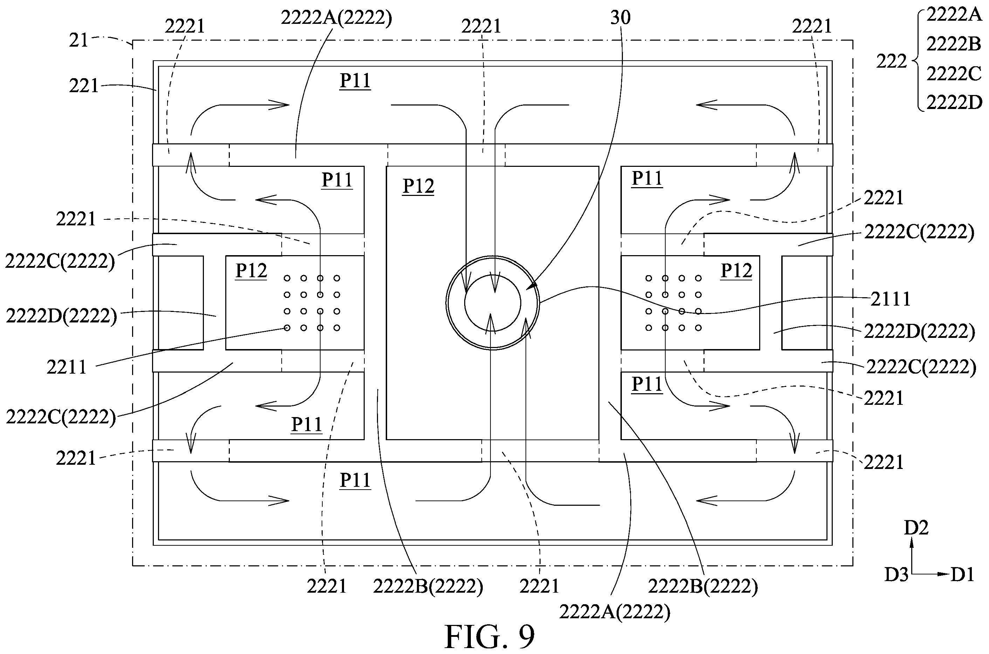

Referring to FIG. 9, the configuration of the partition wall 222 is not limited to that in the foregoing embodiments. In some embodiments, the baffle surfaces 2222 of the partition wall 222 include two first baffle surfaces 2222A, two second baffle surfaces 2222B, four third baffle surfaces 2222C, and two fourth baffle surfaces 2222D. In these embodiments, each of the first baffle surfaces 2222A extends along the first direction D1 between two opposite sides of the second surface 221, and the two first baffle surfaces 2222A are parallel to and spaced apart from each other. Each of the second baffle surfaces 2222B extends along the second direction D2 between the two first baffle surfaces 2222A, and the two second baffle surfaces 2222B are parallel to and spaced apart from each other. Two of the third baffle surfaces 2222C are parallel to each other and respectively extend along the first direction D1 between one side of one of the second baffle surfaces 2222B and one side of the second surface 221, and the remaining two third baffle surfaces 2222C are parallel to each other and extend along the first direction D1 between one side of the other second baffle surface 2222B and the other side of the second surface 221. In these embodiments, a length of the third baffle surface 2222C in the first direction D1 is less than a length of each first baffle surface 2222A in the first direction D1. Each of the fourth baffle surfaces 2222D extends along the second direction D2 and is located between two third baffle surfaces 2222C that are parallel to each other.

Referring to FIG. 9, in these embodiments, each first baffle surface 2222A is provided with three openings 2221 at intervals. Two openings 2221 are located on two ends of the first baffle surface 2222A in the first direction D1, and the remaining one opening 2221 is located between the foregoing two openings 2221. One end of each third baffle surface 2222C connected to the second baffle surface 2222B is provided with the opening 2221. In this way, the openings 2221 on two ends of each of the first baffle surfaces 2222A and the first component 21 form two of the first communication sections P11 extending along the first direction D1. The second baffle surface 2222B, the third baffle surface 2222C, the fourth baffle surface 2222D, and the first component 21 form two second communication sections P12 extending along the second direction D2. Two first baffle surfaces 2222A, two second baffle surfaces 2222B, and the first component 21 form another second communication section P12. Each of the first baffle surfaces 2222A, each of the second baffle surfaces 2222B, and each of the third baffle surfaces 2222C form four first communication sections P11 extending along the first direction D1.

In these embodiments, the first pressure relief hole 2111 is provided in the second communication section P12 formed by the two first baffle surfaces 2222A, two second baffle surface 2222B, and the first component 21. The second pressure relief hole 2211 is provided in the second communication section P12 formed by the second baffle surface 2222B, the two third baffle surfaces 2222C, and the fourth baffle surface 2222D. In these embodiments, when a high-pressure gas is generated in the accommodating space 11 of the box body 10, the high-pressure gas enters the flow channel P of the cover 20 through the second pressure relief hole 2211, then flows through the first communication section P11 formed by the first baffle surface 2222A, the second baffle surface 2222B, the third baffle surface 2222C, and the first component 21 and the first communication section P11 formed by the first baffle surface 2222A and the first component 21 in sequence, and finally enters the second communication section P12 formed by the two first baffle surfaces 2222A, two second baffle surfaces 2222B, and the first component 21 and is discharged through the first pressure relief hole 2111. In this way, in addition to the length of the flow channel P being extended, the position of the first pressure relief hole 2111 can be arranged in the central position of the second surface 221 of the second component 22, thereby adapting to position configurations of different cells B and improving applicability.

The firefighting material E is a substance that can produce a fire extinguishing effect. The firefighting material E is distributed around the cells B. When one of the cells B catches fire and burns, the firefighting material E can produce the fire extinguishing effect. In some embodiments, the firefighting material E is in a dry powder form. In some embodiments where the firefighting material E is in the dry powder form, the firefighting material E may be, but is not limited to, a dry powder fire extinguishing agent such as sodium bicarbonate, sodium chloride, or potassium chloride. In some embodiments where the firefighting material E is sodium bicarbonate, the sodium bicarbonate can produce an endothermic reaction when heated and decompose into carbon dioxide and water. The carbon dioxide can make it difficult for the cell B to continue burning, and the water can absorb heat generated during combustion, thereby effectively achieving a fire extinguishing and cooling effect. In some embodiments, the firefighting material E may include ammonium dihydrogen phosphate and barbituric acid/barbituric acid derivatives. The ammonium dihydrogen phosphate absorbs heat during combustion and decomposes into phosphoric acid and ammonia, and continuously undergo endothermic chemical reactions to generate phosphorus pentoxide and water, thereby achieving a cooling effect. For the barbituric acid or barbituric acid derivatives (such as barbiturate), one hydrogen atom bound to a carbon atom in the barbituric acid is replaced by methyl, ethyl, or isotope. The barbituric acid or barbituric acid derivatives can reduce the concentration of free radicals during combustion, thereby slowing down or stopping the burning of the cell B. In addition, the barbituric acid or barbituric acid derivatives may produce water and carbon dioxide when heated and/or burned, where the water may lower an ambient temperature, and the carbon dioxide may suppress combustion. In some embodiments, a weight percentage of the barbituric acid or barbituric acid derivatives in the firefighting material E is X, and a weight percentage of the ammonium dihydrogen phosphate in the firefighting material E is Y, where X:Y is in a range of 1:99 to 99:1. In some embodiments, the material of the firefighting material E may be selected from cooling and extinguishing materials listed in Patent Publication No. 202400271 of the Republic of China.

It should be noted that the firefighting material E is not limited to the dry powder form. In some embodiments, the firefighting material E may also be in a block form condensed into a block. In these embodiments, the firefighting material E condensed into a block form is distributed around the cells B. When one of the cells B catches fire and burns, the firefighting material E can be blocked between the cover 20 and the box body 10 based on the form of the firefighting material E while producing a fire extinguishing effect, thereby prolonging a time of the fire extinguishing effect produced by the firefighting material E in the box body 10.

In some embodiments, the firefighting material E may also be in the form of granules. In these embodiments, a particle size of the firefighting material E is greater than a diameter of each of the second pressure relief holes 2211. In this way, the firefighting material E is confined in the box body 10, and it is difficult for the firefighting material E to leave the box body 10 through the second pressure relief hole 2211, thereby extending the time of the fire extinguishing effect produced by the firefighting material E in the box body 10.

In some embodiments, the box body 10 of the battery box H is made of a fireproof material. This makes it more difficult for the battery box H to spread fire and reduces safety hazards caused by thermal failure of the battery module. In some embodiments, the fireproof material may be, but is not limited to, metal, fireproof gypsum, or a fireproof fiber material. In some embodiments, the fireproof fiber material may be, but is not limited to, a carbon fiber material, a glass fiber material, a stone fiber material, or a calcium silicate fiber material. In this way, the weight of the box body 10 of the battery box H is reduced without affecting the fireproof performance of the battery box H, thereby improving the applicability of the battery module.

In some embodiments, the battery module further includes a filter 40. The filter 40 is arranged on the pressure relief valve 30. The filter 40 is configured to filter the firefighting material E when the cells B explode and the firefighting material E is ejected through the pressure relief valve 30 along with the explosive gas, to cause the gas to pass through the pressure relief valve 30 and then be discharged through the filter 40, and the firefighting material E can be filtered and retained in the battery box H. In this way, the firefighting material E that has not yet taken effect can be retained in the battery box H to continue exerting the extinguishing and cooling effect, and can also prevent the firefighting material E from erupting with the high-pressure gas and causing pollution to the surrounding environment.

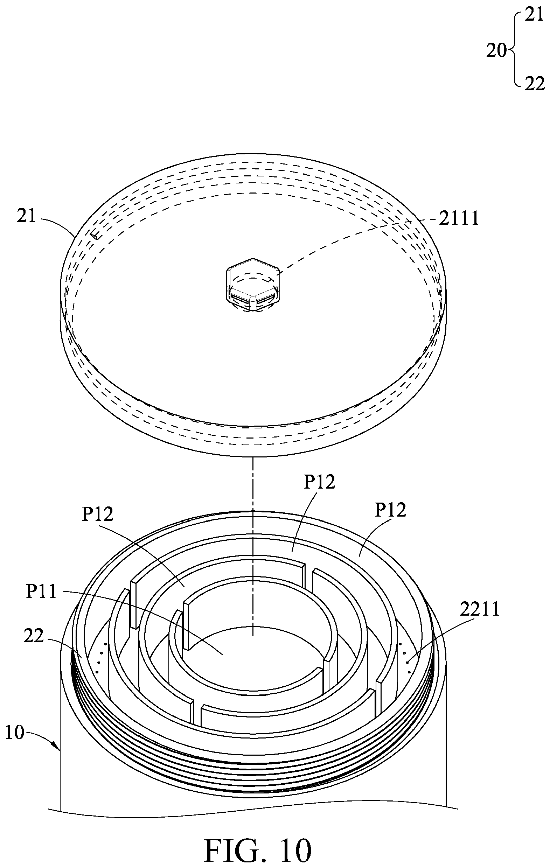

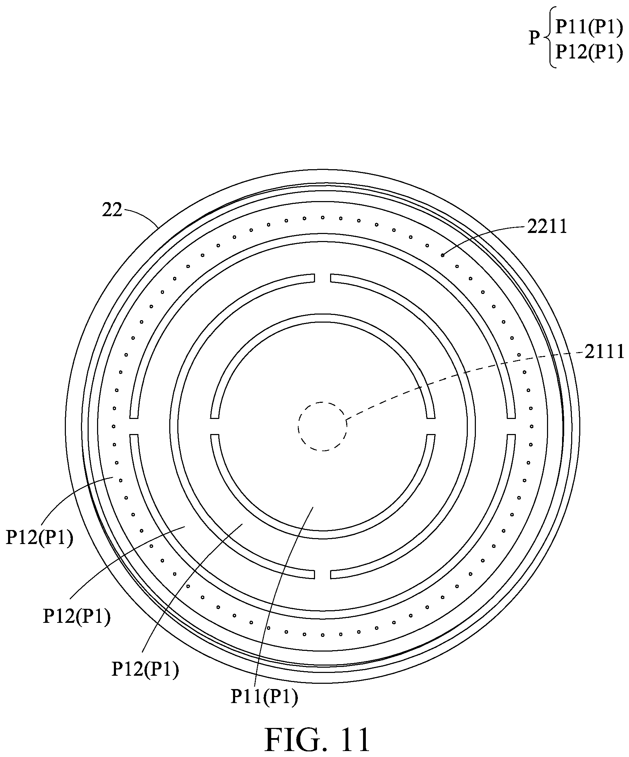

It should be noted that in some embodiments, the box body 10 and the cover 20 shown in FIG. 1 to FIG. 7 are generally rectangular in appearance, but the disclosure is not limited thereto. Referring to FIG. 10 and FIG. 11, in some other embodiments, outer contours of the box body 10 and the cover 20 may also be circular, so as to be suitable for the cells B arranged in a cylindrical shape or for different use spaces.

Referring to FIG. 10 and FIG. 11, in some embodiments where the outer contours of the box body 10 and the cover 20 are circular, the flow channel P of the cover 20 includes a plurality of communication sections P1 each having a circular contour. Referring to FIG. 9, the communication sections P1 include a circular first communication section P11 and an annular second communication section P12. In these embodiments, the first pressure relief hole 2111 corresponds to a position of the first communication section P11, and the second pressure relief hole 2211 is located in a position of the second communication section P12 that is farthest from the first communication section P11.

In some embodiments, a plurality of second communication sections P12 are arranged. Each of the second communication sections P12 is arranged in a concentric annular pattern spaced apart from each other relative to the first communication section P11. The first communication section P11 is in communication with the adjacent second communication section P12, and the adjacent second communication sections P12 are in communication with each other. In this way, through the configuration of flow channels P of different shapes, the pressure reduction effect can also be achieved.

## Claims

1. A battery box (H), comprising:
a box body (10), comprising an accommodating space (11) and an opening (12);
a cover (20), arranged on the opening (12), wherein the cover (20) comprises a flow channel (P) and a first surface (211) and a second surface (221) opposite to each other, the flow channel (P) is provided between the first surface (211) and the second surface (221), the first surface (211) has a first pressure relief hole (2111), the second surface (221) has a second pressure relief hole (2211), and two ends of the flow channel (P) are respectively in communication with the first pressure relief hole (2111) and the second pressure relief hole (2211); and
a pressure relief valve (30), arranged in the first pressure relief hole (2111).

2. The battery box (H) according to claim 1, wherein an area of the first pressure relief hole (2111) is greater than an area of the second pressure relief hole (2211).

3. The battery box (H) according to claim 2, wherein a plurality of second pressure relief holes (2211) are provided, and a sum of areas of the second pressure relief holes (2211) is 90% to 100% of the area of the first pressure relief hole (2111).

4. The battery box (H) according to claim 1, wherein the first surface (211) extends along a first direction (D1) and a second direction (D2) perpendicular to the first direction (D1), the flow channel (P) comprises a plurality of communication sections (P1) that are in communication with each other, a portion of the plurality of communication sections (P1) extends along the first direction (D1), and a portion of the plurality of communication sections (P1) extends along the second direction (D2).

5. The battery box (H) according to claim 4, wherein the cover (20) further comprises a partition wall (222), and in a third direction (D3) perpendicular to the first direction (D1) and the second direction (D2), one end of the partition wall (222) is partially connected to the second surface (221), and an other end of the partition wall (222) extends to the first surface (211).

6. The battery box (H) according to claim 5, wherein the partition wall (222) comprises a plurality of baffle surfaces (2222), and each of the plurality of baffle surfaces (2222) is a planar structure.

7. The battery box (H) according to claim 1, wherein the cover (20) is made of a fireproof material.

8. The battery box (H) according to claim 7, wherein the fireproof material is metal, fireproof gypsum, or a fireproof fiber material.

9. The battery box (H) according to claim 8, wherein the fireproof fiber material is made of a carbon fiber material, a glass fiber material, a stone fiber material, or calcium silicate fiber.

10. A battery module, comprising:
the battery box (H) according to any of claims 1 to 9;
a plurality of cells (B), accommodated in an accommodating space (11) of the box body (10); and
a firefighting material (E), accommodated in the accommodating space (11) and distributed around the cells (B).

11. The battery module according to claim 10, further comprising a filter (40) arranged on the pressure relief valve (30).
